# EUROPEAN PATENT SPECIFICATION

(11) **EP 0 957 463 B1**
(45) Date of publication and mention of the grant of the patent: **08.09.2004**
(21) Application number: 99109436.8
(22) Date of filing: 11.05.1999
(51) Int. Cl.: G08B 13/19, F16M 11/12

(54) **Articulate element for fixing to a wall and/or a ceiling a detecting device, in particular an anti-intrusion device**
Gelenkiges Element zur Befestigung eines Eindringsensors an einer Wand und/oder Decke
Elément articulé pour fixer un dispositif anti-intrusion sur une paroi et/ou plafond

(30) Priority: 11.05.1998 IT TO980392
(43) Date of publication of application: 17.11.1999
(73) Proprietor: Elkron S.p.A., 10092 Beinasco (TO) (IT)
(72) Inventor: Passarelli, Mario, 10092 Beinasco (TO) (IT)
(74) Representative: Dini, Roberto, Dr. Ing.

(56) References cited:
- WO-A-98/08020
- FR-A- 2 481 834
- FR-A- 2 572 576
- FR-A- 2 749 618
- GB-A- 2 162 352
- US-A- 5 692 721

## Description

The present invention relates to an articulated element for fixing to a wall and/or a ceiling a detection device, in particular an anti-intrusion device, and to a detection device comprising said articulated element.

As known, anti-theft or anti-intrusion devices may be located either on a wall or on the ceiling, depending upon the environment to be protected; in order to provide both types of installation, anti-intrusion devices may be equipped with an articulated coupling.

Said articulated coupling generally provides for a support, having a base on one end for its fixing to the wall or the ceiling, whereas the other end has a substantially spherical head; such a spherical head is apt to be inserted in a semispherical cavity provided in the body of the anti-intrusion device.

Coupling between the two components, i.e. between the spherical head of the support and the body of the anti-intrusion device, is usually ensured by a screw, which is screwed in the spherical head of the support from inside the body of the anti-intrusion device.

In this way, by loosening the screw, said semispherical cavity, and consequently the body of the anti-intrusion device, can be rotated to all directions on the spherical head of the support, so as to orient the device according to the specific requirements of the environment to be protected; once a correct work position is reached, the body of the device is secured on the support, by tightening the fastening screw.

However, if on one hand the above system allows orientation and positioning of the anti-intrusion device on a wall or a ceiling, on the other hand it has the serious drawback of being easily tampered.

In particular, tampering may take place by forcing orientation of the active section of the anti-intrusion device towards an area requiring no coverage, such as directing it towards the wall itself or the ceiling, so that it is no longer possible for the anti-intrusion device to perform its detection functions correctly. Since the body of the anti-intrusion can be rotated to all directions, a displacement due to a tampering attempt may take place either towards the wall or the ceiling, independently from the point where the device is correctly fixed to.

Orientation of the anti-intrusion device can be tampered by forcing the movement of the body of the device, even if it is fixed by a screw to the spherical head of its relevant support; it should be noticed, in fact, that the fastening between the two components cannot be obtained too rigidly (i.e. the above screw should not be tightened too much), since this may entail a risk of deformation or cracks to the components themselves, which are made of plastic material, either totally or partially.

Therefore, in this frame, the coupling performance between the anti-intrusion device and the articulated coupling is left to the discretion of the installer.

Moreover, it should be considered that tampering may also be caused by a torsional or angular movement of the anti-intrusion device, so as to change the position of its detection field.

Document US-A-5 692 721 describes an adjustable bracket and housing assembly for passive infrared detective for security systems. The bracket has a mounting member, a cylindrical member allowing horizontal adjustability of the housing assembly and a bracket arm having teeth for vertical adjustability of the housing assembly. The housing assembly has a base and removable cover. The base is attachable to the bracket arm by a screw. The housing assembly cannot be adjusted directionally, unless the cover is removed, thereby providing access to the screw. This latter feature makes the unit of the present invention tamper proof as an alarm will be triggered if the cover is removed from the housing assembly.

In the system described above the electric connection between the sensor of the anti-intrusion device and the elaboration system of the relevant signal, being emitted in the event of a likely intrusion in the environment to be protected, is obtained through an external cable, a portion of which is directly accessible; in particular, in fact, a portion of such a cable extends in sight between a special outlet in the wall and a hole provided on the body of the anti-intrusion device.

Such a configuration allows an easy tampering to the cable, such as short-circuiting it, which would make the anti-intrusion device inoperative.

Document WO 98 08020 A describes a bracket assembly for a detector unit comprising two parts. One part (10) is fixed to a support surface and the other part is fixed to the one part.

The casing of the detector unit is fixed to the other part. A passageway is formed in the bracket for a cable to extend from the support surface to the casing of the detector unit so that it is not possible to disable the unit by cutting or damaging the cable.

Document FR-A-2 749 618 discloses an infra-red sensor detector wall mounting for alarm.

The mounting has two sections connected by a ball joint with two sections along his axis and respectively in contact with the mounting sections. At least one of the ball sections and the adjacent mounting section have complementary shapes allowing relative adjustment of the position of the sections. There are return springs which bias the ball sections towards the mounting sections. There are stops to occupy two extreme positions with regard to the mounting and ball sections.

Both document WO 98 08020 A and FR-A-2 749 618 doesn't allow the mounting of the detection device indifferently either to a wall or to a ceiling and using the same support.

The present invention has the purpose of solving the above drawbacks and provider an articulated element for the fixing to a wall and/or a ceiling of a detection device, in particular an anti-intrusion device, and a detection device comprising such an articulated element, having a higher safety against tampering, which is easy to install and use, having low manufacturing costs.

In this frame, a first aim of the present invention is to provide an articulated element for the fixing to a wall and/or a ceiling of a detection device, in particular an anti-intrusion device, which is equipped with suitable means for preventing an undesired change of the work position assigned to the detection device at its installation stage.

A second aim of the present invention is to provide an articulated element for the fixing to a wall and/or a ceiling of a detection device, in particular an anti-intrusion device, where tampering risks to the electric connection cable between the anti-intrusion device and a relevant elaboration systems are removed.

In order to achieve such aims, it is the object of the present invention to provide an articulated element for the fixing to a wall and/or a ceiling of a detection device, in particular an anti-intrusion device, and a detection device comprising said articulated element, incorporating the with 7, which extend each one sideways to the slit 6; the construction axis of said seats 7 coincides with the axis of the semispherical end 5.

Number 8 (Fig. 4) indicates two holes on the hollow element 4, obtained along the axis of the semicircular seats 7and of the semispherical end 5.

Number 9 indicates a pin having an section being substantially extended-ring shaped, i.e. with two semicircular ends connected by two substantially parallel sides; the pin 9 is hollow inside so as to allow one or more connection wires of the anti-intrusion device 1 to go through to the relevant control system.

A first end 10 of said pin 9 has a substantially circular or disk shape; the diameter of said end 10 is substantially corresponding to the inside diameter of the semispherical end 5, whereas its thickness is equal to the smaller dimension of the section of the pin 9.

On its second end 11, the pin 9 has a thread suitable for screwing a nut 11A.

On each one of its two flat surfaces, the first disk end 10 has a cylindrical protrusion 12, whose diameter is twice the radius of the semicircular seats 7 it will be coupled with; in other words, both cylindrical protrusions 12 are apt to be exactly mated in the seats 7.

A knurling is defined, being not visible in the figures, along one portion 12A of the circumference of each one of said cylindrical protrusions 12, and in particular the portion corresponding to the contact area with the relevant semicircular seat 7.

Outside each cylindrical protrusion 12, on their same axis, a pin 13 is present, whose diameter can be inserted in the holes 8 of the hollow element 4.

For assembly purposes, the pin 9 is inserted through an opening being present in the base 3, within the hollow element 4, until its threaded end 11 comes out of the slit 6 and pins 13 are snap inserted in the holes 8; moreover, under this condition, the cylindrical protrusions 12 rest in the seats 7. In order to facilitate a correct positioning between the sections, two side guides 23 may be provided within the hollow body 4, whose purpose is to guide the insertion of the pin 9 until pins 13 are snap inserted in the holes 8.

In this way, the pin 9 results in being fastened to the hollow element 4, but with the possibility of its vertical motion, i.e. downwards and upwards in a field delimited by the slit 6, the rotary axis of the pin 9 consisting of pins 13.

A semispherical cavity 15 is defined on the external body of the anti-intrusion device 1, in particular in its rear portion, wherein the semispherical end 5 is inserted during the device assembly stage.

The semispherical cavity 15 has a central horizontal slit 16 having a substantially rectangular configuration, which is apt to receive the threaded end 11 of the pin 9; in particular, the width of the slit 16 is substantially equal to the greater dimension of the end 11 of the pin 9.

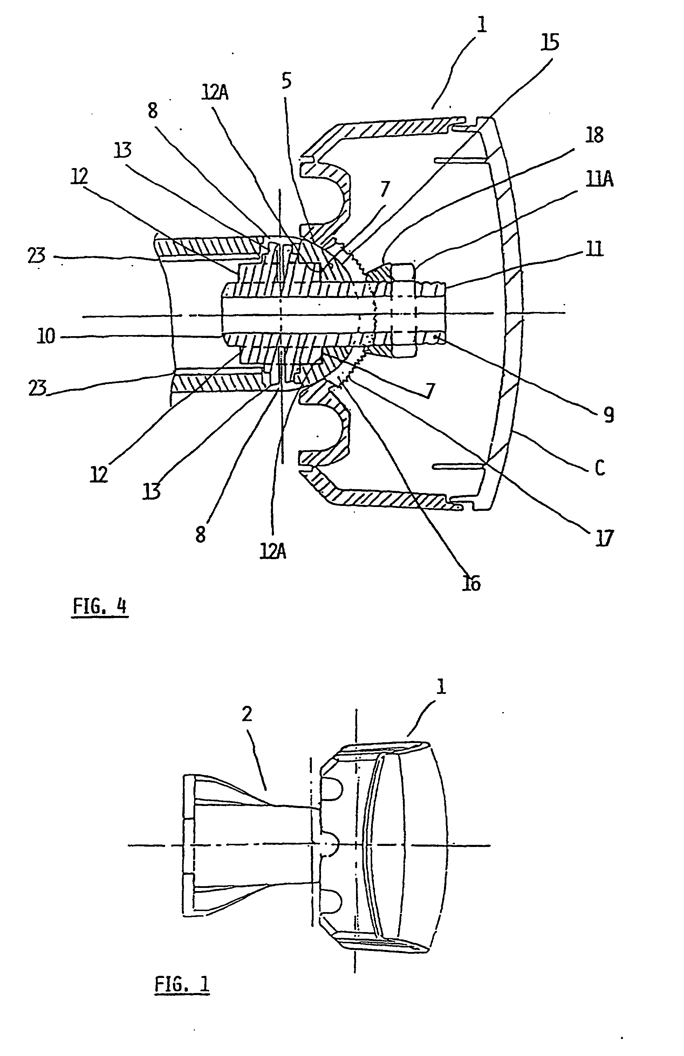

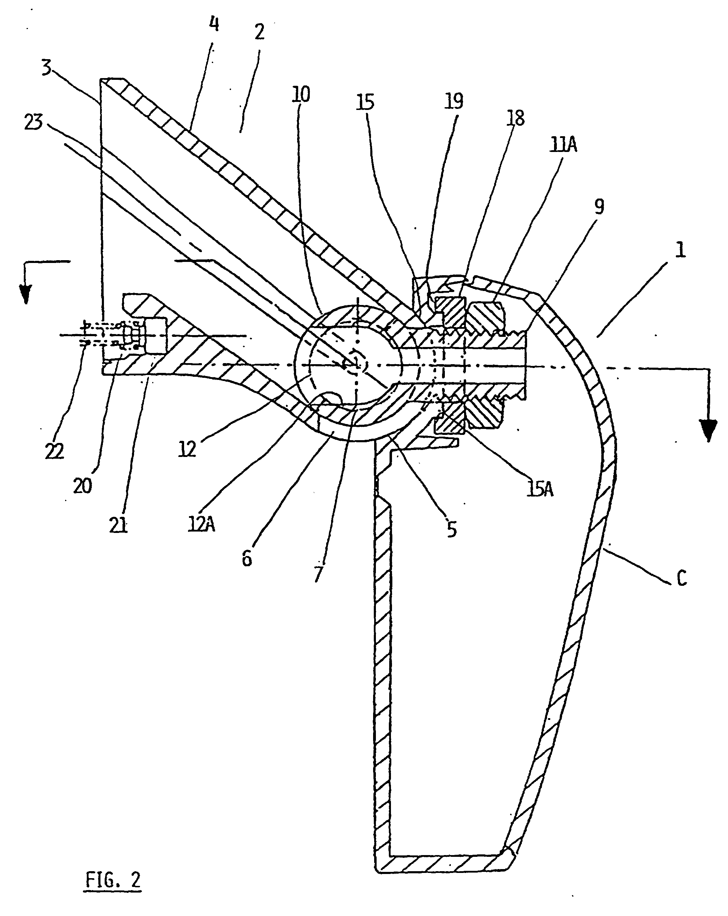

The semispherical cavity 15 is defined in a portion 15A of the device 1 having a substantially semi-cylindrical section, as it can be easily seen from a comparison between Figs. 2 and 4; on the internal surface of such a portion 15A two notches 17 are present (Fig. 4), each one being adjacent to a greater side of the slit 16.

Number 18 indicates a washer laying between the nut 11A and the body of the anti-intrusion device 1; the outside surface of the washer 18 in contact with the nut 11A is flat, whereas the opposite surface is semicircular and has a notch being complementary with respect to the notches 17; the central hole of the washer 18 has substantially the same dimensions and shape as the end 11 of the pin 9.

The body of the device 1 is fastened to the support 2 as further described; to this purpose, it should be remembered, anyway, that during such an assembly step the front part of the body of device 1 is open, i.e. a cover indicated with C in the figures is preliminarily removed from it.

For assembly purposes, the cavity 15 of the body of the device 1 is placed on the end 5 of the support, so that the threaded end 11 of the pin 9 is inserted in the slit 16.

Subsequently, the nut 11A is screwed on the threading of the end 11 of the pin 9, with a washer 18 being interposed.

The body of the device 1 is then oriented to work position deemed to be correct, the slit 6 allowing adjustment in its vertical direction and the slit 16 allowing adjustment in its horizontal direction.

Once the work position is established, the nut 11A is tightened; this tightening causes the notch of the washer 18 to firmly engage with the notches 17 of the portion 15A; such an engagement is such to prevent displacement of the device body 1 in a horizontal direction, even when trying to displace it during a likely subsequent tampering attempt.

Moreover, the tightening of the screw 11A on the washer 18 causes the knurling being present along a portion 12A of the circumference of the cylindrical protrusions 12 of the pin 9, to interfere with the semicircular seats 7; such an interference is such to prevent a rotary motion in a vertical direction of the body of the device 1, so that a tampering attempt to its orientation in that direction is hindered.

A likely torsion stress on the anti-intrusion device 1, i.e. an angular movement being imparted to it, for a possible tampering attempt is hindered in that the central hole of the washer 18 has substantially the same dimensions and shape as the end 11 of the pin 9 and in that the shape of the washer itself mates with the surface of the portion 15A.

In order to further reduce the possible sliding of the washer 18, due to such a torsion stress, both its upper and lower ends may be provided with feet 19, which are apt to mate with respective steps delimited on the ends of the portion 15A, thus developing a further resistance point to torsion stress.

It is also underlined that, should the device be fastened to a wall as represented in Fig. 2, the orientation of the device body 1 can only practically occur by rotating it downwards; under such a situation, in fact, an upward movement (such as tending to direct the device towards the ceiling in the event of a tampering attempt) is surely hindered by the slit 6, since the pin 9 can at its utmost take a horizontal position, due to its upper side striking against the upper end of the slit 6.

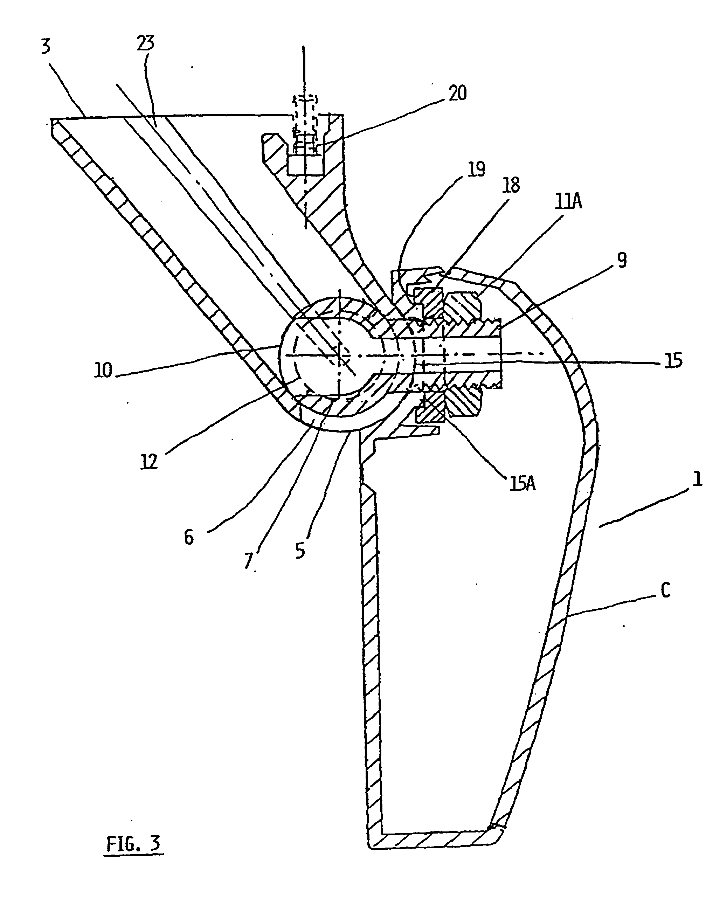

As to the fastening of the anti-intrusion device to a ceiling, the support 2 of the articulated element is positioned as represented in Fig. 3, i.e. with its base 3 fastened to the ceiling and its semispherical end 5 directed to the area under control.

Finally, it should also be noticed that the length extension of the slit 6 and of the hollow element 4 are selected so that a complete downwards displacement of the device body 1 is hindered by the striking of the body itself against a wall, thus warranting in any case a survey coverage of a significant area of the environment under control.

The features of the articulated element for fixing to a wall and/or a ceiling a detection device, in particular an anti-intrusion device, and of the detection device comprising said articulated element are clearly apparent from the above description and annexed drawings.

Obviously, it should be underlined that a tampering attempt of the device cannot occur operating on the nut 11A, since this would presume acting on the front portion of the device 1, which is submitted to the intrusion detection; in any case, a special sensor (such as a micro-switch, can be provided inside the device body, just for detecting a likely removal of the cover C).

It is then obvious, according to the suggested solution, that the wires within the body of the device 1 for connecting the detection means to the relevant control system are completely concealed: the path of such wires extending from the wall whereto the device is fastened and the inside of its body will in fact pass through the opening in the base 3 and cavities of the element 4 of the pin 9, thus being out of reach once the device is installed.

The features of the articulated element for the fixing to a wall and/or a ceiling of a detection device, in particular an anti-intrusion device, and of the detection device comprising said articulated element, described by way of example are clear from the above description.

Specifically, an articulated element for the fixing to a wall and/or a ceiling of a detection device, in particular an anti-intrusion device, has been described, comprising means for the fixing to a wall and/or a ceiling, orientation means, means for the fixing of said detection device in the working position, where mechanical means are provided, which are apt to prevent tampering of the detection device by trying to change said working position.

Said mechanical means are particularly apt to hinder a change in the working position of said device in its vertical direction and/or its horizontal direction and/or its angular direction.

From the above description also the advantages of the articulated element for the fixing to a wall and/or a ceiling of a detection device, in particular an anti-intrusion device, and of the detection device comprising said articulated element according to the present invention are clear.

In particular:
- a tampering of the anti-intrusion device 1, in the meaning of trying to change its position in a vertical direction, such as orienting it towards the ceiling or downwards, is hindered; this in virtue of the knurling 12A, of the limit stop formed by the pin 9 striking against on the upper end of the slit 6 and of the limit stop formed by the device body striking against a wall of the environment;
- a tampering of the anti-intrusion device 1, in the meaning of trying to change its position in a horizontal direction is hindered; this in virtue of the presence of the notches 17 and the notches being present on one surface of the washer 18;
- a tampering of the anti-intrusion device 1 through a torsional stress or angular movement of the same is hindered; this in virtue of the shape and size of the pin 9, of the central hole of the washer 18 and of the shape of the same washer 18, which mates with the surface of the portion 15A;
- a tampering of the anti-intrusion device, by operating on the electric connection wires is hindered, in virtue of the fact that such wires cannot be accessed from outside.

It is obvious that many changes are possible for the man skilled in the art to the articulated element for the fixing to a wall and/or a ceiling of a detection device, in particular an anti-intrusion device, and of the detection device comprising said articulated element described above by way of example, without departing from the novelty spirit of the innovative idea. For instance, in the base 3 a sensor may be inserted, which is apt to detect its detachment from the wall and/or ceiling following a tampering attempt.

With reference to Fig. 2, number 20 indicates such a sensor comprising a micro-switch 21 of the normally open type, and a spring 22.

When the device is fastened to the wall and/or ceiling, the spring 22 is under load and therefore operate on the switch 21, bringing it to its closed position.

Whenever the base 3 is separated from the wall and/or ceiling, the spring, no longer under pressure, releases the switch, which can go over to its opening position, so causing the intervention of the control system, which activates an alarm signal.

A further possible variant embodiment consists in providing indentations, being the notches as previously indicated with 17, both on the portion 12A of the circumference of the cylindrical protrusions 12 and on the surface of the semicircular seats 7, in order avoid any further the possibility of rotary motion in the vertical direction of the body of the device 1.

Another variant embodiment could consist in using not purely mechanical means, such as micro-switches, magnetic and/or optical sensors, to avoid tampering attempts to said detection device 1, i.e. producing an alarm signal should a work position change to the device itself be attempted.

Obviously, many other changes are possible for the man skilled in the art to the articulated element for the fixing to a wall and/or a ceiling of a detection device, in particular an anti-intrusion device, and of the detection device comprising said articulated element, described above by way of example, and it is also clear that in practical actuation of the invention the components may often differ in form and size from the ones described and be replaced with technical equivalent elements.

## Claims

1. An articulated element for fixing to a wall and/or a ceiling a detection device (1), particularly an anti-intrusion device, comprising:
- means (2,3) for fixing to a wall and/or a ceiling said detection device (1), including a support (2) terminating with a base (3);
- means (5,6,9,15,16) for coupling and orienting said detection device (1) in respect of said support (2);
- means (11,11A,18) for fixing said detection device (1) in a working position;
- mechanical means (6,7,9,11A,12,12A,17,18), for preventing tampering of said detection device (1) by changing its working position,
**characterized in that**
- said mechanical means (6,7,9,11A,12,12A,18) comprise said coupling and orienting means (9),
- said coupling and orienting means (9) are at least partially inserted inside said detection device (1),
- blocking means (11,11A,18) are provided for cooperating with said coupling and orienting means (9) in order to keep it fixed in said working position and
- said support (2) has a base (3) shaped in such a form that, in cooperation with said coupling and orienting means (9), allows the resting and fastening either to a wall or to a ceiling of said detection device (1), practically leaving it in the same position in the case of fixing both to a wall and to a ceiling.

2. An element, according to claim 1, **characterized in that** said detection device (1) is apt to receive said coupling and orienting means (9) in order to move its position in accordance with the fixing of said articulated element either to a wall or to a ceiling and to obtain that the detection device (1) is practically in the same position in the case of fixing both to a wall and to a ceiling.

3. An element, according to claim 1 and 2, **characterized in that** said coupling and orienting means (9) comprise an orientation pin (9).

4. An element, according to claim 3, **characterized in that** said orientation pin (9) is hollow inside, so as to allow one or more connection wires of said anti-intrusion device (1) to go through to the relevant control system.

5. An element, according to claim 2, **characterized in that** said orientation pin (9), to which said device (1) is made integral with, is apt to take a work position within a vertical slit (6), where at least an end of said slit (6) forms a limit stop to the movement of said pin (9).

6. An element, according to claim 1, **characterized in that** said mechanical means (6,7,9,11A,12,12A,18) comprise at least a substantially semicircular seat (7), which is apt to house a portion (12,12A) of said pin (9), at least one between the surface of said seat (7) and the surface of said portion (12,12A) having a knurling or notching.

7. An element, according to claim 6, **characterized in that** said mechanical means (6,7,9,11A,12,12A,18) comprise a nut (11A), where the tightening of said nut (11A) on said pin (9) is apt to produce a safe mating between said substantially semicircular seat (7) and said portion (12, 12A) of said pin (9).

8. An element, according to one or more of the previous claims, **characterized in that** said mechanical means (11A, 17,18) comprise at least a notching (17) defined in the body of said device (1), where an indentation of one surface of a washer (18) can be engaged with said notching (17), said washer (18) being mounted on an orientation pin (9) made integral with said device (1).

9. An element according to claim 8, **characterized in that** said mechanical means (11A,17,18) comprise a nut (11A), the tightening of said nut (11A) on said pin (9) being apt to produce a safe coupling between the notching of said body of said device (1) and the indentation of said washer (18).

10. An element, according to one or more of the previous claims, **characterized in that** said mechanical means (9,11A,15A,17,18,19) comprise at least:
- an orientation pin (9), made integral with said device (1), having a section which is at least in part substantially extended-ring shaped;
- a washer (18) with a central hole, whose shape is substantially equal to the section of said pin (9);
- means (11A,15A,19) for coupling said washer (18) with the body of said device (1).

11. An element according to the previous claim, **characterized in that** said coupling means (11A,15A,19) comprise the shape of said washer (18), which is apt to mate with a shaped portion (15A) of said body of said device (1).

12. An element, according to claim 10, **characterized in that** said coupling means (11A, 15A, 19) comprise extensions or protrusions (19) of said washer (18), which are apt to engage in proper seats delimited in said body of said device (1).

13. An element according to one or more of the claims 10 to 12, **characterized in that** said coupling means (11A,17,18) comprise a nut (11A), the tightening of said nut (11A) on said pin (9) being apt to warrant a safe coupling between said washer (18) and said device body (1).

14. An element, according to one or more of the previous claims, **characterized in that** said pin (9) has a first end (10) being substantially disk-shaped, whose thickness is similar to the smaller dimension of said pin (9).

15. An element, according to one or more of the previous claims, **characterized in that** said washer (18) has a flat surface and a curved surface.

16. An element, according to claim 1, **characterized in that** said means (2,3) for the fixing to a wall and/or a ceiling comprise a support (2), which has on one end a resting base (3), wherefrom a hollow element (4) departs with a certain inclination, said hollow element (4) having an end (5) being semispherical shaped externally.

17. An element, according to the previous claim, **characterized in that** said detection device (1) comprises a semispherical seat (15), which is apt to house the semispherical end (5) of said support (2).

18. An element, according to the previous claim, **characterized in that** said semispherical seat (15) has centrally a horizontal slit (16), in particular a notching (17) is adjacent to at least one side of said slit (16).

19. An element, according to claims 15 and 18, **characterized in that** said washer (18) has an indentation equal and complementary to the notching (17) adjacent to said slit (16).

20. An element, according to claim 16, **characterized in that** said hollow element (4) has on the transversal axis of said semispherical end (5) two equal holes (8) being symmetrically opposite.

21. An element, according to claims 16 and 18, **characterized in that** said semispherical end (5) has inside at least a semicircular seat (7), which is extending adjacent to said slit (6).

22. An element, according to one or more of the previous claims, **characterized in that** said disk end (10) of said pin (9) has two cylindrical protrusions (12), which are symmetrically equal and opposite, where in particular at least a portion of the surface (12A) of said protrusions has a knurling.

23. An element, according to the previous claim, **characterized in that** pins (13) depart from said circular protrusions (12), which are apt to be inserted in said holes (8) of said hollow element (4), said pins (13) representing the rotary axis of said detection device (1) in the vertical direction.

24. An element, according to claim 1, **characterized in that** sensor means (20) are provided, which are apt to detect the separation of said fixing means (2,3) from the relevant wall and/or ceiling, in particular said sensor means (20) comprising a switch (21) of the normally open type and a spring (22).

25. An element, according to claim 1, **characterized in that** means are provided to conceal the portion of cables or wires for the electric connection which extend between said detection device (1) and the wall and/or ceiling it is made integral with.

26. An element, according to one or more of the previous claims, **characterized in that** said concealing means comprise an opening in said base (3), an inside passage within said hollow element (4), the inside cavity of said pin (9).

27. An element, according to one or more of the previous claims, **characterized in that** guides (23) are provided to obtain correct insertion and guide of said pin (9) within said hollow element (4).

28. An element, according to claim 1, **characterized in that** not purely mechanical means are provided to hinder tampering of said detection device (1), which produce an alarm signal should the working position of the detection device (1) be changed.

29. An element, according to one or more of the previous claims, **characterized in that** said mechanical means (6,7,9,11A,12,12A,18) are apt to prevent a change in the vertical direction of the working position of said device (1).

30. An element, according to one or more of the previous claims, **characterized in that** said mechanical means (11A,17, 18) are apt to prevent a change in the horizontal direction of the working position of said device (1).

31. An element, according to one or more of the previous claims, **characterized in that** said mechanical means (9,11A, 15A,17,18,19) are apt to prevent a change in the angular direction of the working position of said device (1).

32. A detection device (1), particularly an anti-intrusion device, comprising an articulated element according to one or more of the previous claims, **characterized in that** said detection device (1) is apt to receive one end of said coupling and orienting means (9) in order to move its position in accordance with the fixing of said articulated element either to a wall or to a ceiling and to obtain that the detection device (1) is practically in the same position in the case of fixing both to a wall and to a ceiling.

33. A detection device (1), particularly an anti-intrusion device, according to the previous claims, **characterized in that** a slit (16) is provided in a portion (15A) of said detection device (1) which is apt to receive a threaded end (11) of the pin (9) in order to allow the coupling of said detection device (1) with said support (2).

34. A detection device (1), particularly an anti-intrusion device, according to the previous claim, **characterized in that** notches (17), complementary with respect to the notch of the washer (18), are present on the internal surface of said portion (15A) that allow an improved fastening of said detection device (1) to said support (2).

## Patentansprüche

1. Ein Gelenk-Element zur Befestigung einer Erfassungsvorrichtung (1) an einer Wand und / oder einer Decke, insbesondere eine vor Einbruch schützende Vorrichtung, die folgendes umfasst:
- Mittel (2,3) zur Befestigung der Erfassungsvorrichtung (1) an einer Wand und / oder an einer Decke, die eine Halterung (2) einschließen, die durch eine Basis (3) begrenzt wird;
- Mittel (5, 6, 9, 15, 16) zur Verbindung und Ausrichtung der Erfassungsvorrichtung (1) in Bezug zu der Halterung (2);
- Mittel (11, 11 A, 18) zur Befestigung der Erfassungsvorrichtung (1) in einer Betriebsposition;
- mechanische Mittel (6, 7, 9,11 A, 12, 12 A, 17, 18) zur Verhinderung unbefugter Eingriffe in die Erfassungsvorrichtung (1) durch eine Veränderung ihrer Betriebsposition,
**dadurch gekennzeichnet, dass**
- die mechanischen Mittel (6, 7, 9, 11 A, 12, 12 A, 18) die verbindenden und ausrichtenden Mittel (9) umfassen,
- die verbindenden und ausrichtenden Mittel (9) zumindest teilweise in die Erfassungsvorrichtung (1) eingefügt sind,
- Sperrvorrichtungen (11, 11A, 18) zum Zusammenwirken mit den verbindenden und ausrichtenden Mitteln (9) vorgesehen sind, um sie in der Betriebsposition feststehend zu halten, und
- die Halterung (2) eine Basis (3) aufweist, die in einer solchen Form gestaltet ist, dass sie im Zusammenwirken mit den verbindenden und ausrichtenden Mitteln (9) das Aufliegen und Befestigen entweder an einer Wand oder an einer Decke der Erfassungsvorrichtung (1) gestattet, und sie, in dem Falle, dass sie sowohl an einer Wand als auch an einer Decke befestigt ist, praktisch in derselben Position belässt.

2. Element nach Anspruch 1, **dadurch gekennzeichnet, dass** die Erfassungsvorrichtung (1) geeignet ist, um die verbindenden und ausrichtenden Mittel (9) aufzunehmen, um ihre Position in Übereinstimmung mit der Befestigung des Gelenk-Elements entweder an einer Wand oder an einer Decke zu verändern, und zu erzielen, dass sich die Erfassungsvorrichtung (1) in dem Falle, dass sie sowohl an einer Wand als auch an einer Decke befestigt ist, praktisch in derselben Position befindet.

3. Element nach Anspruch 1 und 2, **dadurch gekennzeichnet, dass** die verbindenden und ausrichtenden Mittel (9) einen Ausrichtungsbolzen (9) umfassen.

4. Element nach Anspruch 3, **dadurch gekennzeichnet, dass** der Ausrichtungsbolzen (9) in seinem Inneren hohl ist, um einem oder mehreren Verbindungsdrähten der vor Einbruch schützenden Vorrichtung (1) zu gestatten, zu der relevanten Steuerung hindurchzuführen.

5. Element nach Anspruch 2, **dadurch gekennzeichnet, dass** der Ausrichtungsbolzen (9), der mit der Vorrichtung (1) integral gebildet ist, geeignet ist, eine Betriebsposition innerhalb eines vertikalen Spaltes (6) einzunehmen, in dem zumindest ein Ende des Spaltes (6) einen Begrenzungspunkt für die Bewegung des Bolzens (9) bildet.

6. Element nach Anspruch 1, **dadurch gekennzeichnet, dass** die mechanischen Mittel (6, 7, 9,11 A, 12, 12 A, 18) zumindest einen im Wesentlichen halbkreisförmigen Sitz (7) umfassen, der geeignet ist, um einen Abschnitt (12, 12 A) des Bolzens (9) unterzubringen, wobei zumindest eine von der Oberfläche des Sitzes (7) und der Oberfläche des Abschnitts (12,12 A) eine Rändelung oder Auszackung aufweist.

7. Element nach Anspruch 6, **dadurch gekennzeichnet, dass** die mechanischen Mittel (6, 7, 9, 11 A, 12, 12 A, 18) eine Mutter (11A) umfassen, wobei das Festziehen der Mutter (11A) auf dem Bolzen (9) geeignet ist, um ein sicheres Ineinandergreifen des im Wesentlichen halbkreisförmigen Sitzes (7) und des Abschnitts (12, 12 A) des Bolzens (9) zu erzeugen.

8. Element nach einem oder mehreren der vorhergehenden Ansprüche, **dadurch gekennzeichnet, dass** die mechanischen Mittel (11 A, 17, 18) zumindest eine Auszackung (17) umfassen, die in dem Körper der Vorrichtung (1) definiert ist, wobei ein Einschnitt auf einer Oberfläche einer Unterlegscheibe (18) mit der Auszackung (17) in Eingriff gebracht werden kann, wobei die Unterlegscheibe (18), die auf einem Ausrichtungsbolzen (9) befestigt ist, integral mit der Vorrichtung (1) gebildet ist.

9. Element nach Anspruch 8, **dadurch gekennzeichnet, dass** die mechanischen Mittel (11 A, 17, 18) eine Mutter (11 A) umfassen, wobei das Festziehen der Mutter (11 A) auf dem Bolzen (9) geeignet ist, um eine sichere Verbindung zwischen der Auszackung des Körpers der Vorrichtung (1) und dem Einschnitt der Unterlegscheibe (18) zu erzeugen.

10. Element nach einem oder mehreren der vorhergehenden Ansprüche, **dadurch gekennzeichnet, dass** die mechanischen Mittel (9, 11A, 15 A, 17, 18, 19) zumindest folgendes umfassen:
- einen Ausrichtungsbolzen (9), der integral mit der Vorrichtung (1) gebildet ist, der einen Abschnitt aufweist, der zumindest teilweise im Wesentlichen die Form eines ausgedehnten Ringes aufweist;
- eine Unterlegscheibe (18) mit einem in der Mitte angeordneten Loch, dessen Form im Wesentlichen dem Abschnitt des Bolzens (9) gleicht;
- Mittel (11 A, 15 A, 19) zur Verbindung der Unterlegscheibe (18) mit dem Körper der Vorrichtung (1).

11. Element nach dem vorhergehenden Anspruch, **dadurch gekennzeichnet, dass** die verbindenden Mittel (11A, 15 A, 19) die Form der Unterlegscheibe (18) umfassen, die geeignet ist, um mit einem geformten Abschnitt (15 A) des Körpers der Vorrichtung (1) zusammenzupassen.

12. Element nach Anspruch 10, **dadurch gekennzeichnet, dass** die verbindenden Mittel (11 A, 15 A, 19) Verlängerungen oder Vorsprünge (19) der Unterlegscheibe (18) umfassen, die geeignet sind, um in passende Sitzflächen einzugreifen, die in dem Körper der Vorrichtung (1) abgegrenzt sind.

13. Element nach einem oder mehreren der Ansprüche 10 bis 12, **dadurch gekennzeichnet, dass** die verbindenden Mittel (11 A, 17, 18) eine Mutter (11 A) umfassen, wobei das Festziehen der Mutter (11A) auf dem Bolzen (9) geeignet ist, um eine sichere Verbindung zwischen der Unterlegscheibe (18) und dem Körper der Vorrichtung (1) zu gewährleisten.

14. Element nach einem oder mehreren der vorhergehenden Ansprüche, **dadurch gekennzeichnet, dass** der Bolzen (9) ein erstes Ende (10) aufweist, das im Wesentlichen einen scheibenförmigen Zustand aufweist, dessen Dicke gleich der kleineren Abmessung des Bolzens (9) ist.

15. Element nach einem oder mehreren der vorhergehenden Ansprüche, **dadurch gekennzeichnet, dass** die Unterlegscheibe (18) eine flache Oberfläche und eine gebogene Oberfläche aufweist.

16. Element nach Anspruch 1, **dadurch gekennzeichnet, dass** die Mittel (2, 3) zur Befestigung an einer Wand und / oder einer Decke eine Halterung (2) umfassen, die an einem Ende eine stützende Basis (3) aufweist, von der sich mit einer bestimmten Neigung ein hohles Element (4) entfernt, wobei das hohle Element (4) ein Ende (5) aufweist, das äußerlich einen halbkugelförmigen Zustand aufweist.

17. Element nach dem vorhergehenden Anspruch, **dadurch gekennzeichnet, dass** die Erfassungsvorrichtung (1) einen halbkugelförmigen Sitz (15) umfasst, der geeignet ist, um das halbkugelförmige Ende (5) der Halterung (2) unterzubringen.

18. Element nach dem vorhergehenden Anspruch, **dadurch gekennzeichnet, dass** der halbkugelförmige Sitz (15) einen zentral angeordneten horizontalen Spalt (16) aufweist, wobei insbesondere eine Auszackung (17) angrenzend an zumindest eine Seite des Spaltes (16) angeordnet ist.

19. Element nach den Ansprüchen 15 und 18, **dadurch gekennzeichnet, dass** die Unterlegscheibe (18) einen Einschnitt aufweist, gleich und komplementär zu der Auszackung (17), die an den Spalt (16) angrenzend angeordnet ist.

20. Element nach Anspruch 16, **dadurch gekennzeichnet, dass** das hohle Element (4) auf der Querachse des halbkugelförmigen Endes (5) zwei gleiche Löcher (8) aufweist, die symmetrisch gegenüberliegend angeordnet sind.

21. Element nach den Ansprüchen 16 und 18, **dadurch gekennzeichnet, dass** das halbkugelförmige Ende (5) in seinem Inneren zumindest einen halbkreisförmigen Sitz (7) aufweist, der sich angrenzend an den Spalt (6) erstreckt.

22. Element nach einem oder mehreren der vorhergehenden Ansprüche, **dadurch gekennzeichnet, dass** das scheibenförmige Ende (10) des Bolzens (9) zwei zylindrische Vorsprünge (12) aufweist, die einen symmetrisch gleichen und einander gegenüberliegenden Zustand aufweisen, wobei insbesondere zumindest ein Abschnitt der Oberfläche (12 A) der Vorsprünge eine Rändelung aufweist.

23. Element nach dem vorhergehenden Anspruch, **dadurch gekennzeichnet, dass** sich die Bolzen (13) von den kreisförmigen Vorsprüngen (12) entfernen, welche geeignet sind, um in die Löcher (8) des hohlen Elements (4) eingeführt zu werden, wobei die Bolzen (13) die Rotationsachse der Erfassungsvorrichtung (1) in der vertikalen Richtung darstellen.

24. Element nach Anspruch 1, **dadurch gekennzeichnet, dass** Sensoren (20) vorgesehen sind, die geeignet sind, um das Abtrennen der befestigenden Mittel (2, 3) von der relevanten Wand und / oder Decke zu ermitteln, wobei insbesondere die Sensoren (20) einen Schalter (21) des Schließer-Typs und eine Feder (22) umfassen.

25. Element nach Anspruch 1, **dadurch gekennzeichnet, dass** Mittel vorgesehen sind, um den Abschnitt von Kabeln oder Drähten für den elektrischen Anschluss zu verdecken, welche sich zwischen der Erfassungsvorrichtung (1) und der Wand und / oder Decke, mit der diese integral gebildet ist, erstrecken.

26. Element nach einem oder mehreren der vorhergehenden Ansprüche, **dadurch gekennzeichnet, dass** die verdeckenden Mittel eine Öffnung in der Basis (3) umfassen, einen inneren Durchgang innerhalb des hohlen Elements (4) und den inneren Hohlraum des Bolzens (9).

27. Element nach einem oder mehreren der vorhergehenden Ansprüche, **dadurch gekennzeichnet, dass** Führungen (23) vorgesehen sind, um ein korrektes Einführen und Führen des Bolzens (9) innerhalb des hohlen Elements (4) zu erzielen.

28. Element nach Anspruch 1, **dadurch gekennzeichnet, dass** nicht ausschließlich mechanische Mittel vorgesehen sind, um unbefugte Eingriffe in die Erfassungsvorrichtung (1) zu verhindern, wobei die Mittel ein Alarmsignal erzeugen, wenn die Betriebsposition der Erfassungsvorrichtung (1) verändert werden sollte.

29. Element nach einem oder mehreren der vorhergehenden Ansprüche, **dadurch gekennzeichnet, dass** die mechanischen Mittel (6, 7, 9, 11 A, 12, 12 A, 18) geeignet sind, um eine Veränderung der Betriebsposition der Vorrichtung (1) in der vertikalen Richtung zu verhindern.

30. Element nach einem oder mehreren der vorhergehenden Ansprüche, **dadurch gekennzeichnet, dass** die mechanischen Mittel (11A, 17, 18) geeignet sind, um eine Veränderung der Betriebsposition der Vorrichtung (1) in der horizontalen Richtung zu verhindern.

31. Element nach einem oder mehreren der vorhergehenden Ansprüche, **dadurch gekennzeichnet, dass** die mechanischen Mittel (9, 11 A, 15 A, 17, 18, 19) geeignet sind, um eine Veränderung der Betriebsposition der Vorrichtung (1) in der winkeligen Richtung zu verhindern.

32. Erfassungsvorrichtung (1), insbesondere eine vor Einbruch schützende Vorrichtung, die ein Gelenk-Element nach einem oder mehreren der vorhergehenden Ansprüche umfasst, **dadurch gekennzeichnet, dass** die Erfassungsvorrichtung (1) geeignet ist, um ein Ende der verbindenden und ausrichtenden Mittel (9) aufzunehmen, um ihre Position zu verändern, in Übereinstimmung mit der Befestigung des Gelenk-Elements entweder an einer Wand oder an einer Decke, und zu erzielen, dass sich die Erfassungsvorrichtung (1) in dem Falle, dass sie sowohl an einer Wand als auch an einer Decke befestigt ist, praktisch in derselben Position befindet.

33. Erfassungsvorrichtung (1), insbesondere eine vor Einbruch schützende Vorrichtung nach den vorhergehenden Ansprüchen, **dadurch gekennzeichnet, dass** ein Spalt (16) in einem Abschnitt (15 A) der Erfassungsvorrichtung (1) vorgesehen ist, der geeignet ist, um ein mit Gewinde versehenes Ende (11) des Bolzens (9) aufzunehmen, um die Verbindung der Erfassungsvorrichtung (1) mit der Halterung (2) zu gestatten.

34. Erfassungsvorrichtung (1), insbesondere eine vor Einbruch schützende Vorrichtung nach dem vorhergehenden Anspruch, **dadurch gekennzeichnet, dass** Auszackungen (17), die einen in Bezug zu der Auszackung der Unterlegscheibe (18) sich ergänzenden Zustand aufweisen, auf der inneren Oberfläche des Abschnitts (15 A) vorhanden sind, die eine verbesserte Befestigung der Erfassungsvorrichtung (1) an der Halterung (2) gestatten.

## Revendications

1. Elément articulé pour fixer à un mur et/ou un plafond un dispositif de détection (1), particulièrement un dispositif anti-intrusion, comprenant :
des moyens (2, 3) pour fixer à un mur et/ou un plafond ledit dispositif de détection (1), comprenant un support (2) se terminant par une base (3) ;
des moyens (5, 6, 9, 15, 16) pour coupler et orienter ledit dispositif de détection (1) par rapport au dit support (2) ;
des moyens (11, 11A, 18) pour fixer ledit dispositif de détection (1) dans une position de fonctionnement ;
des moyens mécaniques (6, 7, 9, 11A, 12, 12A, 17, 18) pour empêcher le fonctionnement intempestif dudit dispositif de détection (1) en changeant sa position de fonctionnement,
**caractérisé en ce que**
lesdits moyens mécaniques (6, 7, 9, 11A, 12, 12A, 17, 18) comprennent lesdits moyens de couplage et d'orientation (9),
lesdits moyens de couplage et d'orientation (9) sont au moins en partie insérés dans ledit dispositif de détection (1),
des moyens de blocage (11, 11A, 18) sont prévus pour coopérer avec lesdits moyens de couplage et d'orientation (9) afin de les maintenir fixés dans ladite position de fonctionnement et
ledit support (2) a une base (3) formée en une forme qui, en coopération avec lesdits moyens de couplage et d'orientation (9), permet au dit dispositif de détection (1) de reposer et d'être attaché soit sur un mur soit sur un plafond, le laissant pratiquement dans la même position dans le cas de la fixation à la fois à un mur et à un plafond.

2. Elément selon la revendication 1, **caractérisé en ce que** ledit dispositif de détection (1) est apte à recevoir lesdits moyens de couplage et d'orientation (9) afin de déplacer sa position selon la fixation dudit élément articulé soit à un mur soit à un plafond et pour obtenir que le dispositif de détection (1) soit pratiquement dans la même position dans le cas ou il est fixé à la fois à une mur et à un plafond.

3. Elément selon les revendications 1 et 2, **caractérisé en ce que** lesdits moyens de couplage et d'orientation (9) comprennent un axe d'orientation (9).

4. Elément selon la revendication 3, **caractérisé en ce que** ledit axe d'orientation (9) est creux à l'intérieur, de façon à permettre à un ou plusieurs fils de liaison dudit dispositif anti-intrusion (1) de passer jusqu'au système de contrôle approprié.

5. Elément selon la revendication 2, **caractérisé en ce que** ledit axe d'orientation (9), qui est intégré avec ledit dispositif (1), est apte a prendre une position de fonctionnement dans une fente verticale (6), où au moins une extrémité de ladite fente (6) forme une limite d'arrêt au mouvement dudit axe (9).

6. Elément selon la revendication 1, **caractérisé en ce que** lesdits moyens mécaniques (6, 7, 9, 11A, 12, 12A, 18) comprennent au moins une assise (7) semi-circulaire, qui est apte à loger une partie (12, 12A) dudit axe (9), au moins l'une parmi la surface de ladite assise (7) et la surface de ladite partie (12,12A) étant moleté ou pourvu d'encoches.

7. Elément selon la revendication 6, **caractérisé en ce que** lesdits moyens mécaniques (6, 7, 9, 11A, 12, 12A, 18) comprennent un écrou (11A), où le serrage dudit écrou (11A) sur ledit axe (9) est apte à produire une liaison sûre entre ladite assise (7) sensiblement semi-circulaire et ladite partie (12, 12A) dudit axe (9).

8. Elément selon une ou plus des revendications précédentes, **caractérisé en ce que** lesdits moyens mécaniques (11A, 17, 18) comprennent au moins une dentelure (17) définie dans le corps dudit dispositif (1), où un enfoncement sur une surface d'une rondelle (18) peut être en prise avec ladite dentelure (17), ladite rondelle (18) étant montée sur un axe d'orientation (9) intégré avec ledit dispositif (1).

9. Elément selon la revendication 8, **caractérisé en ce que** lesdits moyens mécaniques (11A, 17, 18) comprennent un écrou (11A), le serrage dudit écrou (11A) sur ledit axe (9) étant apte à produire un couplage sûr entre la fente dudit corps dudit dispositif (1) et l'enfoncement de ladite rondelle (18).

10. Elément selon une ou plus des revendications précédentes, **caractérisé en ce que** lesdits moyens mécaniques (9, 11A, 15A, 17, 18, 19) comprennent au moins :
un axe d'orientation (9), intégré avec ledit dispositif (1), ayant une section qui est au moins en partie en forme de bague sensiblement étendue ;
une rondelle (18) avec un trou central, dont la forme est sensiblement la même que la section dudit axe (9) ;
des moyens (11A, 15A, 19) pour coupler ladite rondelle (18) avec le corps dudit dispositif (1).

11. Elément selon la revendication précédente, **caractérisé en ce que** lesdits moyens de couplage (11A, 15A, 19) comprennent la forme de ladite rondelle (18), qui est apte à correspondre à une partie formée (15A) dudit corps dudit dispositif (1).

12. Elément selon la revendication 10, **caractérisé en ce que** lesdits moyens de couplage (11A, 15A, 19) comprennent des extensions ou saillies (19) de ladite rondelle (18), qui sont aptes à venir en prise avec les assises propres délimitées dans ledit corps dudit dispositif (1).

13. Elément selon une ou plus des revendications 10 à 12, **caractérisé en ce que** lesdits moyens de couplage (11A, 17, 18), comprennent un écrou (11A), le serrage dudit écrou (11A) sur ledit axe (9) étant apte à garantir un couplage sûr entre ladite rondelle (18) et ledit corps de dispositif (1).

14. Elément selon une ou plus des revendications précédentes, **caractérisé en ce que** ledit axe (9) a une première extrémité (10) étant sensiblement en forme de disque, dont l'épaisseur est similaire à la dimension la plus petite dudit axe (9).

15. Elément selon une ou plus des revendications précédentes, **caractérisé en ce que** ladite rondelle (18) a une surface plate et une surface courbée.

16. Elément selon la revendication 1, **caractérisé en ce que** lesdits moyens (2, 3) pour la fixation à un mur et/ou à un plafond comprennent un support (2) qui a à une extrémité une base d'appui (3), d'où un élément creux (4) part avec une certaine inclinaison, ledit élément creux (4) ayant une extrémité (5) ayant une forme extérieure hémisphérique.

17. Elément selon la revendication précédente, **caractérisé en ce que** ledit dispositif de détection (1) comprend une assise semi-sphérique (15), qui est apte à loger l'extrémité semi-sphérique (5) dudit support (2).

18. Elément selon la revendication précédente, **caractérisé en ce que** ladite assise semi-sphérique (15) a au centre une fente horizontale (16), en particulier une dentelure (17) est adjacente à au moins un côté de ladite fente (16).

19. Elément selon les revendications 15 et 18, **caractérisé en ce que** ladite rondelle (18) a une dentelure égale et complémentaire à la dentelure (17) adjacente à ladite fente (16).

20. Elément selon la revendication 16, **caractérisé en ce que** ledit élément creux (4) a sur l'axe transversal de ladite extrémité semi-sphérique (5) deux trous égaux (8) symétriquement opposés.

21. Elément selon les revendications 16 et 18, **caractérisé en ce que** ladite extrémité semi-sphérique (5) a à l'intérieur au moins une assise semi-sphérique (7), qui s'étend adjacente à ladite fente (6).

22. Elément selon une ou plus des revendications précédentes, **caractérisé en ce que** ladite extrémité en disque (10) dudit axe (9) a deux saillies cylindriques (12), qui sont symétriquement égales et opposées, où en particulier au moins une partie de la surface (12A) desdites saillies est moletée.

23. Elément selon la revendication précédente, **caractérisé en ce que** des axes partent desdites saillies circulaires (12), qui sont aptes à être insérés dans lesdits trous (18) dudit élément creux (4), lesdits axes (13) représentant l'axe de rotation dudit dispositif de détection (1) dans la direction verticale.

24. Elément selon la revendication 1, **caractérisé en ce que** des moyens formant capteur (20) sont prévus, qui sont aptes à détecter la séparation desdits moyens de fixation (2, 3) du mur et/ou du plafond concerné, en particulier lesdits moyens formant capteur (20) comprennent un commutateur (21) du type normalement ouvert et un ressort (22).

25. Elément selon la revendication 1, **caractérisé en ce que** des moyens sont prévus pour cacher la partie des câbles ou fils pour la liaison électrique qui s'étendent entre ledit dispositif de détection (1) et le mur et/ou le plafond auxquels il est intégré.

26. Elément selon une ou plus des revendications précédentes, **caractérisé en ce que** lesdits moyens de dissimulation comprennent une ouverture dans ladite base (3), un passage interne dans ledit élément creux (4), la cavité intérieure dudit axe (9).

27. Elément selon une ou plus des revendications précédentes, **caractérisé en ce que** des guides (23) sont prévus pour obtenir une insertion correcte et un bon guidage dudit axe (9) dans ledit élément creux (4).

28. Elément selon la revendication 1, **caractérisé en ce que** des moyens qui ne sont pas purement mécaniques sont prévus pour empêcher le fonctionnement intempestif dudit dispositif de détection (1), qui produit un signal d'alarme si la position de fonctionnement du dispositif de détection (1) est changée.

29. Elément selon une ou plus des revendications précédentes, **caractérisé en ce que** lesdits moyens mécaniques (6, 7, 9, 11A, 12, 12A, 18) sont aptes à empêcher un changement de la direction verticale de la position de fonctionnement dudit dispositif de détection (1).

30. Elément selon une ou plus des revendications précédentes, **caractérisé en ce que** lesdits moyens mécaniques (11A, 17, 18) sont aptes à empêcher un changement de la direction horizontale de la position de fonctionnement dudit dispositif (1).

31. Elément selon une ou plus des revendications précédentes, **caractérisé en ce que** lesdits moyens mécaniques (9, 11A, 15A, 17, 18, 19) sont aptes à empêcher un changement de la direction angulaire de la position de fonctionnement dudit dispositif.

32. Dispositif de détection (1), particulièrement un dispositif anti-intrusion, comprenant un élément articulé selon une ou plus des revendications précédentes, **caractérisé en ce que** ledit dispositif de détection (1) est apte à recevoir une extrémité desdits moyens d'orientation et de couplage (9) afin de déplacer sa position selon la fixation dudit élément articulé soit à un mur soit à un plafond et pour obtenir que le dispositif de détection (1) soit pratiquement dans la même position dans le cas de fixation à la fois à un mur et un plafond.

33. Dispositif de détection (1), particulièrement un dispositif anti-intrusion, selon les revendications précédentes, **caractérisé en ce qu'**une fente (16) est placée dans une partie (15A) dudit dispositif de détection (1) qui est apte à recevoir une extrémité filetée (11) de l'axe (9) afin de permettre le couplage dudit dispositif de détection (1) au dit support (2).

34. Dispositif de détection (1), particulièrement un dispositif anti-intrusion, selon la revendication précédente, **caractérisé en ce que** des encoches (17), complémentaires avec l'encoche de la rondelle (18), sont présentes sur la surface interne de ladite partie (15A) qui permet une fixation améliorée dudit dispositif de détection (1) au dit support.
